(19) Europäisches Patentamt
European Patent Office
Office européen des brevets

(11) **EP 3 493 183 B1**

## (12) EUROPEAN PATENT SPECIFICATION

(45) Date of publication and mention
of the grant of the patent:
**14.07.2021 Bulletin 2021/28**

(21) Application number: **17879163.8**

(22) Date of filing: **06.12.2017**

(51) Int Cl.:
*G09F 3/06* (2006.01)   *G09F 3/02* (2006.01)
*G09F 3/12* (2006.01)   *A01G 23/099* (2006.01)

(86) International application number:
**PCT/UA2017/000119**

(87) International publication number:
**WO 2018/106209 (14.06.2018 Gazette 2018/24)**

(54) **LUMBER TAG**

HOLZETIKETT

ÉTIQUETTE POUR LE MARQUAGE DU BOIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2016 UA 201612491**

(43) Date of publication of application:
**05.06.2019 Bulletin 2019/23**

(73) Proprietor: **Novikov, Vitalii Vitaliiovych
Ivano-Frankivska obl. 77500 (UA)**

(72) Inventor: **Novikov, Vitalii Vitaliiovych
Ivano-Frankivska obl. 77500 (UA)**

(74) Representative: **AOMB Polska Sp. z.o.o.
Ul. Emilii Plater 53
21st Floor
00-113 Warsaw (PL)**

(56) References cited:
**EP-A1- 1 862 992        WO-A1-01/99089
DE-A1-102009 023 258     FR-A1- 2 810 436
GB-A- 2 075 464          UA-C2- 112 048**

## Description

## Technical Field

The invention relates to the means of the identification of the lumber or the wood products and can be used in the forestry and woodworking industry for the accounting of the lumber or for the scientific research.

## Prior Art

There is the well-known lumber tag [UK Patent No. 2075464 A, cl. G09F 3/04, publ. 1981], containing a rectangular plate, with the information on the working face, four mounting teeth located at the corners of the plate from the informational working face, two fastening means are placed on the rear face of the plate and made in the projection on the rear face of the plate in the form of two symmetrical wave-shaped protuberances relative to an axial line that passes through the centre of the plate and is parallel to its short side thereof, and in the normal section the fastening means have the form of a rectangle, connecting a triangle on it, which with its two sides forms a slotted element of the fastening means - a wedge, and the tip of the triangle above the short side of the rectangle forms a locking element - a tooth that is directed on both waves of the fastening means in opposite directions to the relatively short axial line of the plate, and the locking element - the tooth is made only on the peripheral parts of the fastening means, that is, discretely.

The disadvantages of the well-known tag include the following:

> the fastening means have an unstable shape, which can lead to its breakage when mounting the tag in hard wood;
> low stiffness of this tag leads to its destruction when mounting in hard wood;
> the absence of solid locking elements on the fastening means allows unauthorized disassembly of the tag in order to conduct abuses.

The prototype of the claimed invention is a lumber tag [Patent of Ukraine No. 112048 C2, cl. G09F 3/04, publ. 2016], which is a rectangular plate, having the information on the front, working face thereof, and four mounting teeth are placed at the corners; four wedge-shaped grooves are situated adjacent the teeth, on the short sides of the plate, the fastening means are provided on the rear face of the plate, made in the form of two symmetrical wave-shaped protuberances situated along the edges of the short sides of the plate perpendicularly to the face of the plate, the fastening means in normal section has the shape of a rectangle with the dimensions of the sides a and $b$ ($a > b$), connecting to a triangle on it, which with its two sides forms a slotted element of the fastening means - a wedge, and the tip of the triangle above the short side $b$ of the rectangle forms a locking element - a tooth that is directed on both waves of the fastening means in opposite directions to the relatively short axial line of the plate.

However, fastening means made in the form of two symmetrical wave-shaped protuberances, during fastening of the tag (azimuthal placement of the tag relative to the wood fibers randomly) can be placed at the weakened structural components of the wood, for example, the boundaries between the annual rings, which will not ensure reliable attachment of the tag in the body of the lumber. In addition, the design of the well-known tag has a low rigidity, which leads to its destruction during installation in solid wood, and also allows its unauthorized disassembly of the lumber for the purpose of abuse. Document DE102009023258A is considered the closest prior art for the subject-matter of the present invention.

## Disclosure of Invention

The basis of the invention is the task of increasing the rigidity and improving the performance properties, which will provide a more secure fastening in the body of lumber and the impossibility of unauthorized disassembly.

The task is solved by the lumber tag disclosed in claim 1, wherein the lumber tag is a rectangular plate, having the information on the front, working face thereof, and four mounting teeth are placed at the corners; four wedge-shaped grooves are situated adjacent the teeth, on the short sides of the plate, fastening means are provided on the rear face of the plate, made in the form of two symmetrical wave-shaped protuberances situated along the edges of the short sides of the plate perpendicularly to the face of the plate, the fastening means in normal section has the shape of a rectangle with the dimensions of the sides a and $b$ ($a > b$), connecting to a triangle on it, which with its two sides forms a slotted element of the fastening means - a wedge, and the tip of the triangle above the short side $b$ of the rectangle forms a locking element - a tooth that is directed on both waves of the fastening means in opposite directions to the relatively short axial line of the plate, *according to the invention,* additionally contains two symmetrical protective elements on the rear face, made in the form of two symmetrical wave-shaped protuberances situated perpendicular to the rear face of the plate, along the edges of the long sides thereof, symmetrically about an axial line that passes through the centre of the plate and is parallel to the long sides thereof, the protective elements in normal section have a pointed wedge-shaped part, associated with a rectangle, while the height of the protective elements is less than the height of the fastening means, and the peripheral portions of the protective elements extend into a region occupied by the fastening elements and overlap with the projections of said fastening elements in a plane that passes through th e longer axial line of the plate and is perpendicular to the rear face of the rectangular plate, by an amount *p* determined from

the relationship

$$p = (0.01 \ldots 0.99)\, q,$$

where $q$ is the distance from the edge of the peripheral part of the fastening means to the hollow of this fastening elements, measured in the projections of said fastening elements in a plane that passes through the longer axial line of the plate and is perpendicular to the rear face of the rectangular place, while the height of the protective elements $h_3$ is determined from the relationship:

$$h_3 = (0.27 \ldots 0.99)\, h_k$$

where $h_k$ is the height of the fastening means, and the angle of taper of the fastening means and protective elements is within

$$30° < \varphi < 170°.$$

Execution on the rear face of the plate of two protective wave-shaped elements situated perpendicularly to the fastening means, provides a simultaneous increase in the stiffness of the tag and an increase in the holding capacity of the tag in the lumber. This is ensured by the fact that the peripheral parts of the protective wave-shaped elements located in the region of the fastening means, having a height $h_3$ less than the height of the fastening means ($h_k$ ($h_3 = (0.27 \ldots 0.99)\, h_k$), compact the lumber in the region of the locking element of the fastening means, and thus increases the reliability of fixing tags in the body of the lumber.

**Brief Description of the Drawings**

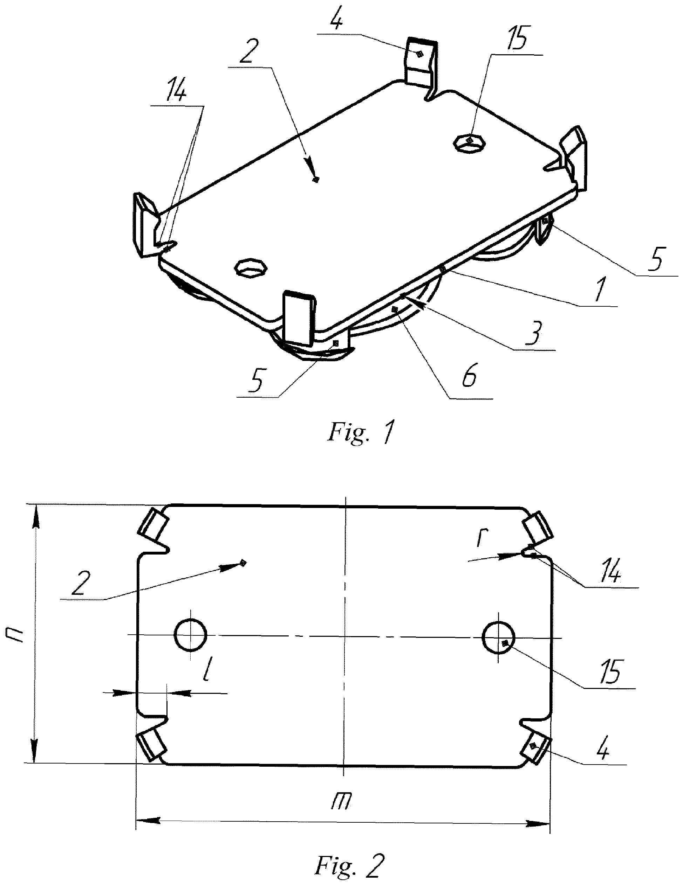

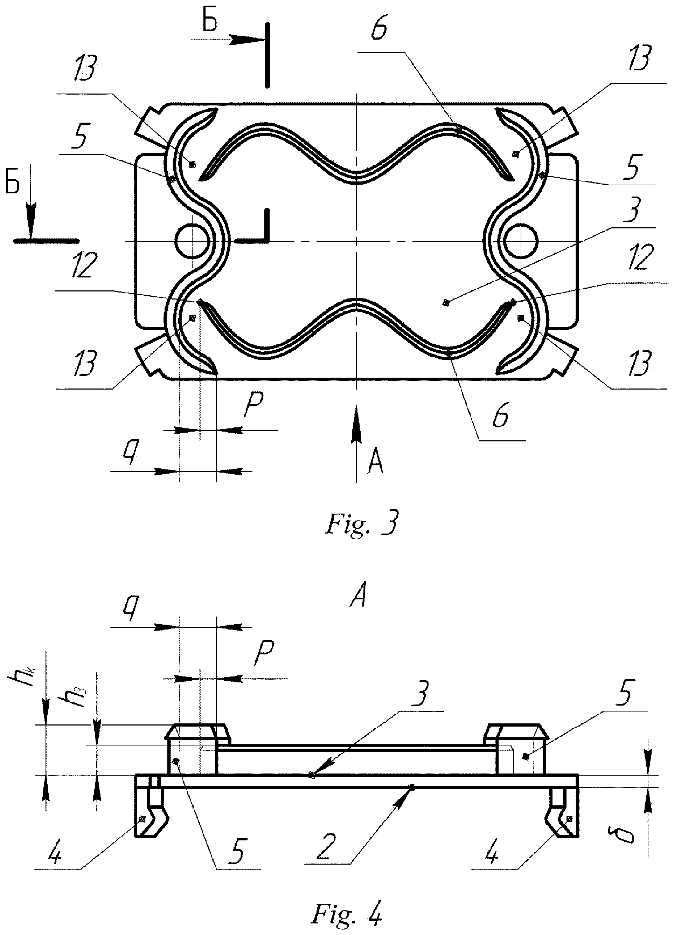

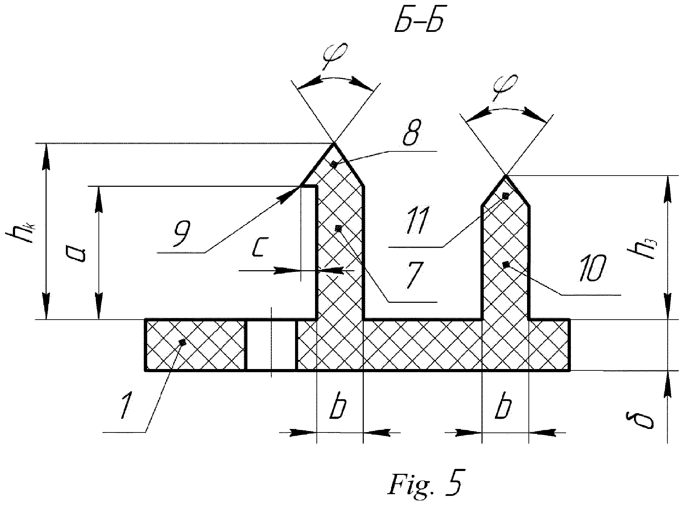

Figure 1 shows a general view of the lumber tag (in a perspective view); in Figure 2 is a view of the tag from the working information face (above); in Figure 3 is a view of the tag from the rear face (bottom), in Figure 4 is a view A of Figure 3; in Figure 5 is a section B - B in Figure 4.

The lumber tag consists of a rectangular plate 1 with a working face 2 and a rear face 3. On the working face 2 at the corners of the plate 1 four mounting teeth 4 are placed. On the rear face 3 of the plate 1 there are fastening means 5, made in the form of two symmetrical wave-shaped protuberances relative to the short axis of the plate 1 and the protective wave-shaped elements 6, located at the edges of the long sides of a rectangular plate, symmetrically to the axial line passing through the centre of a rectangular plate and parallel to its long side. In the normal section, both fastening means 5 have the form of a rectangle 7 with the dimensions of the sides $a$ and $b$ ($a > b$), which passes into the triangle 8, which with its two sides forms the slotted element of the fastening means 5 - a wedge. The tip of the triangle 8 above the short side $b$ of the rectangle 7 forms a locking element of the fastening means 5 - a tooth 9 of the length c that is directed on both waves of the fastening means 5 in opposite directions to the relatively short axial line of the plate 1.

On the rear face 3 of the plate 1 there are also two symmetrical protective wave-shaped elements 6. In the normal section both protective wave-shaped elements 6 have the form of a rectangle 10 associated with a triangle 11 - by a wedge-shaped part. The protective wave-shaped elements with their peripheral parts 12 extend to the region 13 occupied by the fastening means 5.

In the body of the plate there are four wedge-shaped grooves 14, which create a stress-strain state in the tag mounted on the lumber, ensuring its destruction when attempting the unauthorized disassembly.

In the body of the plate 1, two holes 15 are made, intended for group drawing up of the tags into a cassette using a special plastic Π-shaped rod (not shown in Figures 1-5). Collected in the cassette tags set in the store of the automated means of lumber marking.

**An Embodiment of the Invention**

The installation of the lumber tag is done as follows.

Previously, on the working face 2 of the plate 1, by any known method (painting, spraying, lithography, engraving, burning using laser technology, etc.) is reproduced the corresponding information in the form of alphanumeric inscriptions and (or) Barcodes or QR codes etc.

After this, the tag is installed and fixed with the help of four mounting teeth 4 on the striker of a special hand hammer or in a special automated assembly means - a pistol (with preliminary drawing up the tags into the cassette) (not shown in Figures 1- 5).

Impact force from a special hand hammer or the executive body of an automated assembly means - a pistol is applied to the working face 2 of the tag and directed perpendicularly to the plane of the lumber at the place of installation of the lumber tag. Then the fastening means 5 and the protective wave-shaped elements 6 penetrate into the body of wood. The penetration itself is provided by the slotted element of the fastening means 5 - a wedge 7, and the slotted element of the protective wave-shaped elements 6 - by a wedge formed by a triangle 11, which cut through and push the wood fibers. The tag reaches its working position when the fastening means 5 and the protective wave-shaped elements 6 are fully immersed in wood fibers, and the rear face 3 of the plate 1 is completely in contact with the surface of the lumber, which is marked (not shown in Figures 1 - 5).

Since the fibers of the wood on which the tag is installed can be placed at any angle to the fastening means 5, the presence of specially situated two protective wave-shaped elements 6 increases the performance characteristics of the lumber tag.

Execution on the rear face 3 of the plate 1 of two protective wave-shaped elements 6, located perpendicularly to the fastening means 5, provides a simultaneous increase in the rigidity of the tag and increase the holding capacity of the tag in the wood. This is ensured by the fact that the peripheral parts of the protective wave-shaped elements 9 located in the region 13 of the location of the fastening means 5, having a height $h_3$ less than the height of the fastening means $h_k$, ($h_3 = (0.27 ... 0.99)$ $h_k$) compact the wood in the area of the locking element of the fastening means 5 and thus increases the reliability of fixing of the tags in the body of wood.

The penetration of the fastening means 5 and symmetrical protective wave-shaped elements 6 into the wood is determined by the angle of the taper of the wedge-shaped parts $\varphi$, which have the shape of triangles 7 and 11, respectively. The magnitude of these angles is chosen greater for soft woods and smaller for more solid wood species.

The implementation of the protective wave-shaped elements 6 in such a way that their peripheral part 12 extends the region 13 of the location of the fastening means 5 and overlaps their projection onto a plane that passes through the large axial line of the rectangular plate and is perpendicular to the rear face of the rectangular plate by an amount $p$ determined from the relation

$$p = (0.01...0.99)q,$$

where $q$ is the distance from the edge of the peripheral part of the fastening means to the hollow of this means, measured in the projection on a plane that passes through the large axial line of the rectangular plate and is perpendicular to the rear face of the rectangular plate, *mm,* increases the rigidity of the tag, provides high reliability of fixing and makes impossible unauthorized disassembly of the lumber tags.

An example of a specific implementation of the claimed lumber tag. The material of the lumber tag is high quality technical plastic. Tag color - black; inscriptions - white color. With a label thickness $\delta = 1.2$ mm, the overall dimensions of its plate are: $m = 43$ mm - width; $n = 27$ mm - height; $q = 4$ mm is the distance from the edge of the peripheral part of the fastener to the hollow of this fastening mean, measured in projection on a plane that passes through the large axial line of the rectangular plate and perpendicular to the rear face of the rectangular plate; $p = 2$ mm - the amount of overlap of the projection of the fastening means on the plane, which passes through the large axial line of the rectangular plate and is perpendicular to the rear face of the rectangular plate; $h_k = 5$ mm - the height of the fastening means; $c = 0,35$ mm - the locking element of the fastening means (tooth); $h_3 = 3,5$ mm - the height of the protective wave-shaped elements; $\varphi = 80°$ - the angle of the sharpening of the fastening means and the protective wave-shaped elements.

When reducing the geometric dimensions of the lumber tag, the information working surface of the area decreases, and with an increase, the rigidity of the tag decreases and its installation on the lumber becomes more complicated. With the above numerical values of the geometric dimensions of the elements, the best performance properties of the lumber tag are ensured.

## Industrial Applicability

Material: the tag can be made of durable high quality technical plastic or metal. The color of the tag is usually black, and the inscriptions are white. On the working face of the tag plate in any known way (painting, spraying, lithography, engraving, burning using laser technology, etc.) is reproduced the relevant information in the form of alphanumeric inscriptions and (or) Barcodes or QR codes etc.

The proposed design of the lumber tag has increased rigidity and ensures high reliability of fixing the tag in the wood and makes impossible the unauthorized disassembly.

## Claims

1. A lumber tag presenting the rectangular plate (1) having the information on the front working face thereof and four mounting teeth (4) at the corners. Four wedge-shaped grooves (14) are situated adjacent the teeth, on the short sides of the plate. Fastening means (5) are provided on the rear face of the plate, said fastening means being in the form of two symmetrical wave-shaped protuberances situated along the edges of the short sides of the plate, perpendicular to the rear face thereof, the fastening means in normal section has the shape of a rectangle (7) with the dimensions of the sides a and *b* (*a*> *b*), connecting to a triangle (8) on it, which with its two sides forms a slotted element of the fastening means - a wedge, and the tip of the triangle above the short side *b* of the rectangle forms a locking element - a tooth that is directed on both waves of the fastening means in opposite directions to the relatively short axial line of the plate, **characterised by** that it additionally contains two symmetrical protective elements (6) on the rear face, made in the form of two symmetrical wave-shaped protuberances situated perpendicularly to the rear face of the plate, along the edges of the long sides thereof, symmetrically about an axial line that passes through the centre of the plate and is parallel to the long sides thereof. The protective elements in the normal section have the form of a rectangle (10) associated with a triangle (11) by a wedge-shaped part, while the height of the protective elements is less than the height of the fastening means, and the peripheral portions of the protective elements extend into a region occupied by the fastening elements and overlap with the projections of said fastening elements in a plane that passes through the longer axial line of the plate and is perpendicular to the rear face of the rectangular plate, by an amount p determined from the relationship

$$p = (0.01 \dots 0.99)q,$$

where q is the distance from the edge of the peripheral part of the fastening means to the hollow of this fastening elements, measured in the projections of said fastening elements in a plane that passes through the longer axial line of the plate and is perpendicular to the rear face of the rectangular place, while the height of the protective elements $h_3$ is determined from the relationship:

$$h_3 = (0.27 \dots 0.99)\, h_k$$

where $h_k$ is the height of the fastening means, and the angle of taper of the fastening means and protective elements is within

$$30° < \varphi < 170°.$$

**Patentansprüche**

1. Eine Holzkennzeichnung, die die rechteckige Platte (1) mit den Informationen auf ihrer vorderen Arbeitsfläche und vier Befestigungszähnen (4) an den Ecken aufweist. Vier keilförmige Nuten (14) befinden sich neben den Zähnen an den kurzen Seiten der Platte.
Auf der Rückseite der Platte sind Befestigungsmittel (5) vorgesehen, die die Form von zwei symmetrischen wellenförmigen Protuberanzen haben, die sich entlang der Kanten der kurzen Seiten der Platte befinden, senkrecht zu deren Rückseite, wobei die Befestigungsmittel im Normalschnitt die Form eines Rechtecks (7) mit den Abmessungen der Seiten a und $b$ ($a>b$) haben, an das sich ein Dreieck (8) anschließt, das mit seinen beiden Seiten ein geschlitztes Element des Befestigungsmittels - einen Keil - bildet, und die Spitze des Dreiecks über der kurzen Seite $b$ des Rechtecks ein Verriegelungselement - einen Zahn - bildet, der auf beiden Wellen des Befestigungsmittels in entgegengesetzter Richtung zur relativ kurzen axialen Linie der Platte gerichtet ist, **dadurch gekennzeichnet, dass** es zusätzlich zwei symmetrische Schutzelemente (6) auf der Rückseite enthält, die in Form von zwei symmetrischen wellenförmigen Protuberanzen ausgeführt sind, die senkrecht zur Rückseite der Platte entlang der Kanten ihrer langen Seiten symmetrisch um eine axiale Linie angeordnet sind, die durch die Mitte der Platte verläuft und parallel zu ihren langen Seiten ist. Die Schutzelemente im Normalschnitt haben die Form eines Rechtecks (10), das durch einen keilförmigen Teil mit einem Dreieck (11) verbunden ist, wobei die Höhe der Schutzelemente geringer ist als die Höhe der Befestigungsmittel, und die Umfangsabschnitte der Schutzelemente sich in einen Bereich erstrecken, der von den Befestigungselementen eingenommen wird, und sich mit den Protuberanzen der besagten Befestigungselemente in einer Ebene überlappen, die durch die längere axiale Linie der Platte verläuft und senkrecht zur Rückseite der rechteckigen Platte ist, und zwar um einen Betrag p, der aus der Beziehung bestimmt wird:

$$p = (0.01 \dots 0.99)q,$$

wobei q der Abstand von der Kante des Umfangsteils der Befestigungsmittel zur Vertiefung dieser Befestigungselemente ist, gemessen in den Protuberanzen dieser Befestigungselemente in einer Ebene, die durch die längere axiale Linie der Platte verläuft und senkrecht zur Rückseite des rechteckigen Platzes ist, während die Höhe der Schutzelemente $h_3$ aus der Beziehung bestimmt wird:

$$h_3 = (0.27 \dots 0.99)\, h_k$$

wobei $h_k$ die Höhe des Befestigungsmittels ist und der Kegelwinkel des Befestigungsmittels und der Schutzelemente innerhalb

$$30° < \varphi < 170°.$$

**Revendications**

1. Une étiquette en bois présentant la plaque rectangulaire (1) ayant les informations sur la face de travail avant de celle-ci et quatre dents de montage (4) aux coins. Quatre rainures en forme de cales (14) sont situées au voisinage des dents, sur les côtés courts de la plaque.
Des moyens de fixation (5) sont prévus sur la face arrière de la plaque, lesdits moyens de fixation se présentant sous la forme de deux protubérances en forme de vagues symétriques situées le long des bords des côtés courts de la plaque, perpendiculairement à la face arrière de celle-ci, les moyens de fixation en section normale ont la forme d'un rectangle (7) avec les dimensions des côtés a et $b$ ($a>b$), se connectant à un triangle (8) sur celui-ci, qui avec ses deux côtés forme un élément fendu des moyens de fixation - une cale, et la pointe du triangle au-dessus du côté court *b* du rectangle forme un élément de verrouillage - une dent qui est dirigée sur les deux vagues des moyens de fixation dans des sens opposés à la ligne axiale relativement courte de la plaque,

**caractérisée en ce que**

elle contient en outre deux éléments de protection symétriques (6) sur la face arrière, réalisés sous la forme de deux protubérances en forme de vagues symétriques situées perpendiculairement à la face arrière de la plaque, le long des bords des côtés longs de celle-ci, symétriquement par rapport à une ligne axiale qui passe par le centre de la plaque et est parallèle aux côtés longs de celle-ci. Les éléments de protection en section normale ont la forme d'un rectangle (10) associé à un triangle (11) par une partie en forme de cale, tandis que la hauteur des éléments de protection est inférieure à la hauteur des moyens de fixation, et les parties périphériques des éléments de protection s'étendent dans une région occupée par les éléments de fixation et chevauchent les saillies desdits éléments de fixation dans un plan qui passe par la ligne axiale la plus longue de la plaque et est perpendiculaire à la face arrière de la plaque rectangulaire, par un montant p déterminé à partir de la relation

$$p = (0.01 \dots 0{,}99)q,$$

où q est la distance entre le bord de la partie périphérique des moyens de fixation et le creux de ces éléments de fixation, mesurée dans les saillies desdits éléments de fixation dans un plan qui passe par la ligne axiale la plus longue de la plaque et est perpendiculaire au face arrière de la plaque rectangulaire, tandis que la hauteur des éléments de protection $h_3$ est déterminée à partir de la relation:

$$h_3 = (0{,}27 \dots 0{,}99) \, h_k$$

où $h_k$ est la hauteur des moyens de fixation, et l'angle de cône des moyens de fixation et des éléments de protection est compris dans la plage de

$$30° < \varphi < 170°.$$

Fig. 1

Fig. 2

Fig. 3

Fig. 4

Б–Б

*Fig. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2075464 A
- UA 112048 C2
- DE 102009023258 A